# EUROPÄISCHE PATENTSCHRIFT

(11) **EP 0 438 815 B1**
(45) Veröffentlichungstag und Bekanntmachung des Hinweises auf die Patenterteilung: **29.09.1993**
(21) Anmeldenummer: 90202318.3
(22) Anmeldetag: 31.08.1990
(51) Int. Cl.: G01P 3/52

(54) **Aktiver Schwingungsdämpfersensor zur Messung der Relativgeschwindigkeit zwischen Aufbau und Achse**
Active sensor for a shockabsorber for measuring the relative speed between body and axle
Capteur actif pour amortisseur de vibration pour mesurer la vitesse entre la carrosserie et l'axe

(30) Priorität: 11.12.1989 DE 3940819
(43) Veröffentlichungstag der Anmeldung: 31.07.1991
(73) Patentinhaber: AUGUST BILSTEIN GMBH & CO. KG, 58240 Ennepetal (DE)
(72) Erfinder: Wörmann, Thomas, Dipl.-Ing., D-5600 Wuppertal 1 (DE)

(56) Entgegenhaltungen:
- EP-A- 0 337 797
- DE-A- 3 536 201
- DE-U- 8 524 086
- FR-A- 525 333
- US-A- 4 815 575

## Beschreibung

Die Erfindung bezieht sich auf einen adaptiven Schwingungsdämpfersensor zur Messung der Relativgeschwindigkeit zwischen dem Aufbau eines Kraftfahrzeuges und der betreffenden Achse. In der Regel ist der Schwingungsdämpfer das Bindeglied, welches die Schwingungen von der Fahrbahnoberfläche, übertragen durch das Radfedersystem, auf die Karosserie mehr oder weniger überträgt. Für diesen Anwendungsfall werden insbesondere hydraulische, regelbare Schwingungsdämpfer eingesetzt.

Um den Anforderungen der Automobilindustrie nach mehr Sicherheit und mehr Komfort Rechnung zu tragen, werden im zunehmenden Maße Messungen notwendig, die die Relativgeschwindigkeit zwischen Aufbau und Achse eines betreffenden Kraftfahrzeuges messen. Diese Messungen müssen genau sein, da das erzeugte Meßsignal zur Regelung bzw. Steuerung der Schwingungsdämpfer verwendet wird. Dieses Meßsignal der Relativgeschwindigkeit stellt somit ein Abbild des von dem Fahrzeug befahrenen Untergrundes dar.

Mit der nicht vorveröffentlichten DE-A-39 09 190 ist ein Schwingungsdämpfersensor für ein geregeltes semiaktiv Fahrwerk mit einem Relativgeschwindigkeitssensor bekannt geworden. Ohne aufwendige und teuere Sensoren wird die Relativgeschwindigkeit mit einem feststehenden Dauermagneten und einer darüber beweglichen Sensorwicklung gemessen. Bei einer ausgeführten Schwingung wird so durch den magnetischen Fluß des Dauermagneten in der bewegten Sensorwicklung ein Spannungssignal induziert, welches proportional zur Relativgeschwindigkeit zwischen Aufbau und Achse ist.

Auch mit dem Gebrauchsmuster DE-U-85 24 086 ist ein Sensor bekannt geworden, der aus einem beweglichen Permanentmagneten und stationären Wicklungen besteht.

Ein Beschleunigungsgeber, welcher durch ein Federelement eine Spule im magnetischen Feld eines Magneten bewegt, ist mit der DE-OS 23 03 104 bekannt geworden.

Die DE-A- 35 38 349 offenbart eine Vorrichtung, die mit verschiedensten Sensoren ausgerüstet ist. Auch der DE-A- 35 22 010 ist ein Wegsensor mit einer Spule und einem relativ zur Spule bewegbar angeordneten Kern zu entnehmen.

Die DE-A- 35 36 201 beschreibt eine Einrichtung zum Erfassen der relativen Position von zwei relativ zu einander bewegten Teilen. Es soll eine zuverlässige Signalgewinnung sowohl in der Hochlage als auch in der Tieflage ermöglicht werden.

Alle bisher bekannt gewordenen Sensoren bzw. Systeme sind in oder an den Schwingungsdämpfern fest integriert. Hierin ist ein sehr großer Nachteil zu sehen, denn die Sensoren können nicht nachträglich an bereits bestehende Schwingungsdämpfer bzw. radgeführte Federbeine angebaut werden. Darüber hinaus wird vielfach eine Versorgungsspannung für die entsprechende Sensorwicklung bzw. Sensoreinrichtung benötigt. Ferner ist es bei dem bekannt gewordenen Stand der Technik so, daß jeweils nur der Dauermagnet bzw. die Spule fest stehen, d. h., das gewonnene Relativsignal wird aus der Relativbewegung zwischen Spule und Magnet gewonnen.

Die Aufgabe der Erfindung ist es, einen adaptiven aktiven Schwingungsdämpfersensor zur Messung der Relativgeschwindigkeit zwischen Aufbau und Achse eines Fahrzeuges zu schaffen, der leicht adaptiert werden kann, keine beweglichen Verschleißteile beinhaltet, genau mißt und preiswert in der Herstellung ist.

Die Aufgabe wird mit der im Patentanspruch 1 angegebenen Erfindung gelöst. Die abhängigen Ansprüche geben weitere vorteilhafte Ausgestaltungen der Erfindung wieder.

Mit dem erfindungsgemäßen Sensor wird insbesondere der Vorteil einer zuverlässigen Signalgewinnung bei gleichzeitiger Adaption auf bestehende Federbeine bzw. Schwingungsdämpfer erzielt.

Die Zeichnungen geben schematisch den Erfindungsgegenstand in verschiedenen Ausführungen wieder:
Es zeigt
- Fig. 1:: Ein radgeführtes Federbein mit einem adaptierten Relativgeschwindigkeitssensor
- Fig. 2:: Eine Ausführung mit einer Wicklung und einem Dauermagneten
- Fig. 3:: Ein radgeführes Federbein mit adaptierten Relativgeschwindigkeitssensor, der aus zwei Magneten und einer Sensorwicklung besteht
- Fig. 4:: Schematische Anordnung einer Sensorwicklung und einem Dauermagneten
- Fig. 5: Adaptierter Sensor in einem vorbereiteten Dämpferrohr

Die Erfindung soll anhand einiger Ausführungsbeispiel näher erläutert werden. Der Schwingungsdämpfersensor zur Messung der Relativgeschwindigkeit ist so konstruiert, daß er als Adapter auf das nicht eingespannte Ende des Dämpfungsrohres eines Schwingungsdämpfers aufgesetzt werden kann. Dabei müssen berücksichtigt werden der Außendurchmesser des Zylinders und der Durchmesser der eintauchenden Kolbenstange. Aufgrund dieser Bauausführungen, ist es möglich, den Schwingungsdämpfersensor sowohl auf einen handelsüblichen Schwingungsdämpfer nachträglich aufzusetzen als auch auf ein MC-Pherson-Federbein. Gerade bei diesen radgeführten Federbeinen bestand bisher nicht die Möglichkeit, auf relativ einfache und sichere Art und Weise die Relativgeschwindigkeit zwischen Aufbau und Radmasse zu messen. Der adaptierte Sensor wird über ein Kabel mit dem im Fahrzeug befindlichen Rechner verbunden. Der Rechner wiederum errechnet aus dem Signal des Sensors die notwendige Stellkraft für die Dämpfungsventile innerhalb des Schwingungsdämpfers.

Gerade bei den Federbeinen spielt die Totlänge des verwendeten Dämpferrohres keine so ausschlaggebende Rolle, wie bei einem normalen Schwingungsdämpfer. Es wäre deshalb auch möglich, daß direkt bei der Herstellung das Dämpferrohr entsprechend dem zur datierenden Sensor verlängert wird, um den Sensor nachträglich einzusetzen.

Dadurch, daß der Relativgeschwindigkeitssensor adaptiv immer auf das Dämpferrohr oder auf den Zylinder aufgesetzt wird, ist es sichergestellt, daß der Sensor keinen Bewegungen ausgesetzt wird.

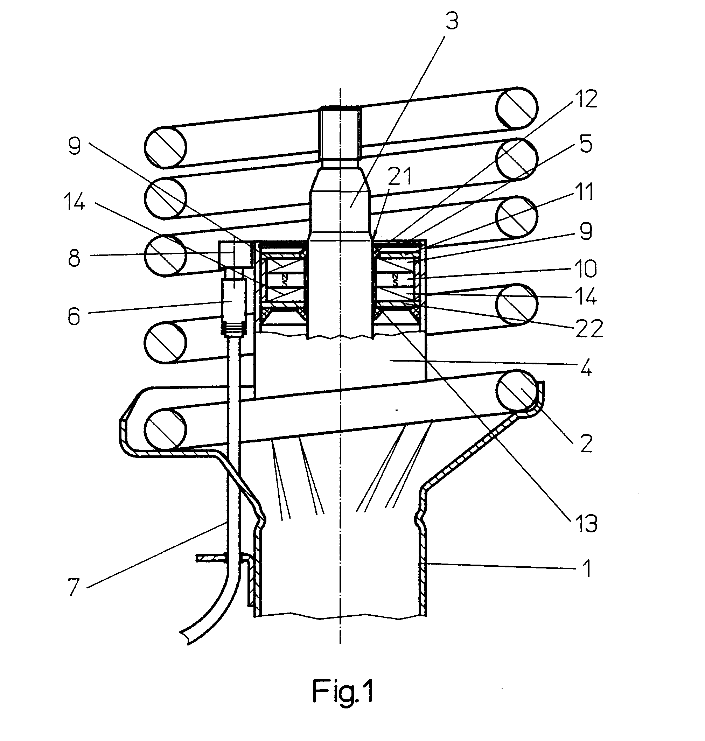

In einem Sensorgehäuse (11) befindet sich nach dem Ausführungsbeispiel der Figur 1 der Reihe nach eine Sensorwicklung (9) danach ein Dauermagnet (10) und danach wieder eine Sensorwicklung (14). Die beiden Sensorwicklungen sind so geschaltet, daß sie in Reihe liegen. Dieses hat zur Folge, daß das Ende der Wicklung (9) mit dem Anfang der Wicklung (14) verbunden wird. Der Anfang der Wicklung (9) und das Ende der Wicklung (14) werden über die Steckbuchse (8) und die Steckverbindung (6) über das Anschlußkabel (7) mit dem im Fahrzeug befindlichen Rechner verbunden. Zwischen den beiden Wicklungen (9 und 14) liegt ein Dauermagnet (10), der in axialer Richtung magnetisiert ist. Der Kraftfluß des magnetischen Flusses geht somit in die Wicklungen hinein. Die Wicklungen und auch der Dauermagnet sind konzentrisch um eine Bohrung aufgebaut. Die Bohrung hat den Durchmesser der durchgehenden Kolbenstange (3). Zwischen der Kolbenstange (3) und dem Dauermagneten mit den beiden Wicklungen befindet sich ein geringer Luftspalt (13). Die Kolbenstange (3) darf nicht aus einem antimagnetischen Material bestehen.

Wird aufgrund von Bodenunebenheiten die Kolbenstange (3) bewegt, so wird gleichzeitig auch der magnetische Fluß des Dauermagneten (10) gestört. Diese Störung hat zur Folge, daß in den Wicklungen (9) und (10) eine Spannung induziert wird. Diese Spannung ist ein Maß für die Relativgeschwindigkeit zwischen der Aufbaumasse und der Radmasse. Je schneller sich die Kolbenstange bewegt, um so größer ist auch im Betrag die induzierte Spannung. Die induzierte Spannung ist proportional der Relativgeschwindigkeit.

Wichtig ist, daß beim Austritt aus dem Sensorgehäuse (11) die Kolbenstange (3) durch eine Abstreifvorrichtung (12) geführt wird, damit eventuell an der Kolbenstange anhaftende Verunreinigungen nicht in das Sensorinnengehäuse gelangen können.

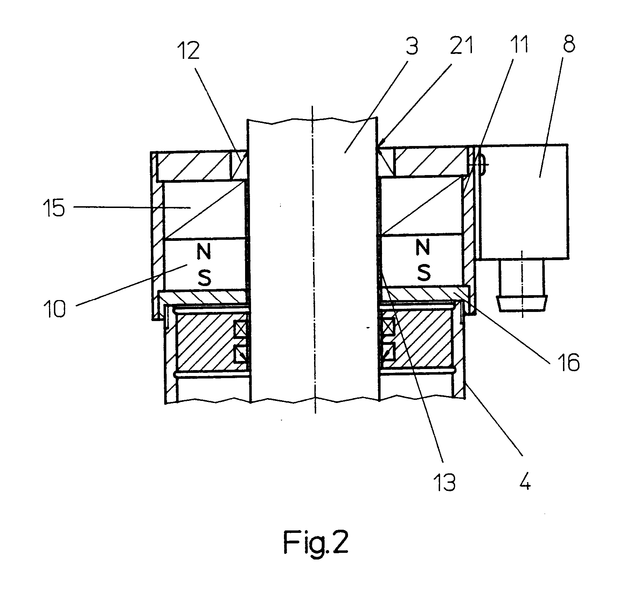

In einem weiteren Ausführungsbeispiel Fig. 2 wird in einem Sensorgehäuse (11) wiederum eine selbsttragende Sensorwicklung (15) dargestellt, welche sich mit einem Magneten (10) zusammen in dem Gehäuse befindet. Auch mit dieser Anordnung, die sich in diesem Falle auf einem normalen Schwingungsdämpferzylinder befindet, ist die Relativgeschwindigkeit zwischen Rad-und Aufbaumasse genau zu messen. Das von der Kolbenstange (3) induzierte Spannungssignal in der Wicklung (15) wird über die Steckverbindung (8) an den nicht dargestellten Fahrzeugrechner weitergegeben. Damit aber kein magnetischer Nebenschluß vorhanden ist, muß der Verschluß (16) des Sensorgehäuses (11), ebenfalls wie das Sensorgehäuse, aus einem antimagnetischen Material bestehen. Der Dämpfungszylinder (4), welcher im Normalfall aus Eisen besteht wird durch den Verschluß (16) den magnetischen Fluß des Dauermagneten (10) nicht stören, weil durch den antimagnetischen Verschluß (16) ein künstlicher Luftspalt geschaffen worden ist. Auch bei den vorgenannten und bzw. noch zu nennenden Ausführungsbeispielen ist es wichtig, daß das Sensorgehäuse (11) immer aus einem antimagnetischen Material bestehen muß.

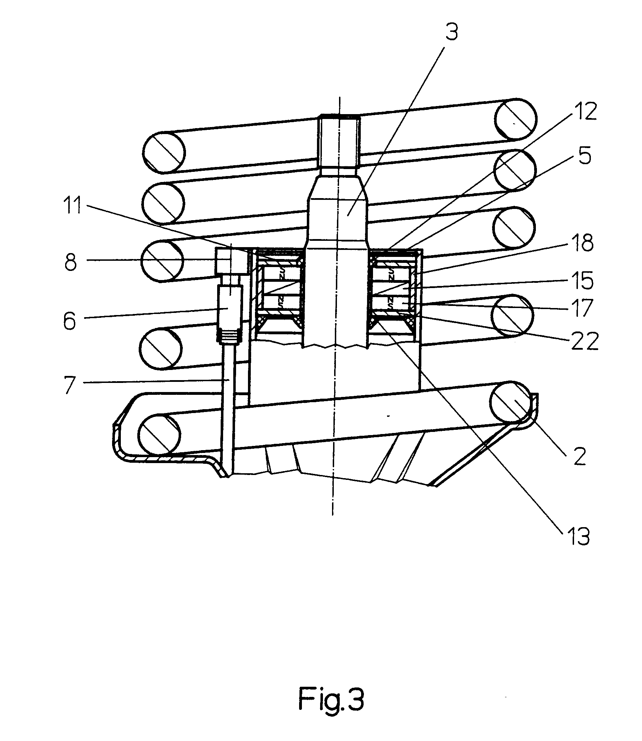

In eine weiteren Ausgestaltung der Erfindung wird in Fig. 3 eine andere Anordnung der Sensorbauteile dargestellt. In diesem Falle ist wiederum nur eine Wicklung (15) vorhanden. Oberhalb und unterhalb der Wicklung befinden sich Dauermagnetscheiben. Diese Dauermagnete sind wiederum in axialer Richtung magnetisiert. Der Einbau der Magnete muß so gestaltet sein, daß jeweils zur Wicklung gerichtet die Magnetpole gleichnamig sein müssen, d. h. die Magnete versuchen sich abzustoßen. Das durch die Kolbenstange (3) induzierte Spannungssignal in der Sensorwicklung (15) wird wiederum über die Steckbuchse (8) und das Anschlußkabel (7) an den nicht dargestellten Fahrzeugrechner abgeführt. Auch hier bildet den Abschluß zum Dämpfungszylinder eine Isolierschicht (22), die einem Luftspalt gleichzusetzen ist.

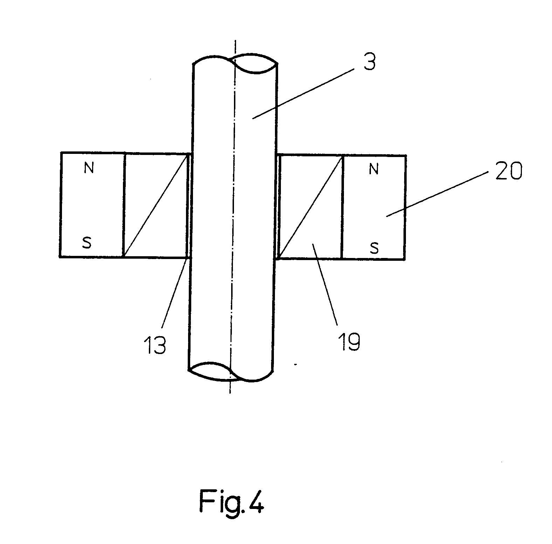

Eine weitere Ausgestaltung der Erfindung zeigt die Fig. 4, in der schematisch dargestellt ist, wie sich eine Sensorwicklung (19) konzentrisch um die Kolbenstange (3) fügt. Auch hier ist natürlich zwischen der Sensorwicklung (19) und der Kolbenstange (3) ein Luftspalt (13) vorhanden. Um die konzentrische Sensorwicklung (19) fügt sich ein Ringmagnet (20), der ebenfalls in axialer Richtung magnetisiert ist.

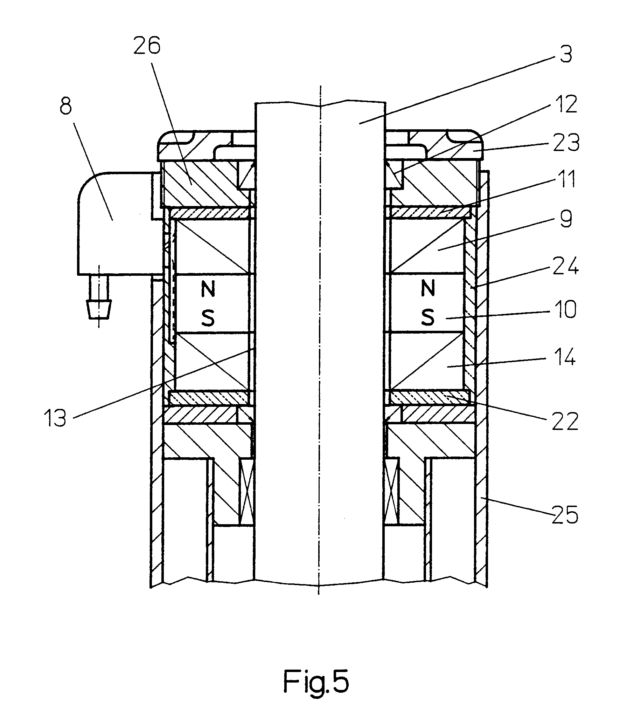

Das Ausführungsbeispiel der Figur 5 zeigt ein Dämpferrohr (25) welches bereits für die Aufnahme eines Sensors vorbereitet ist. Der adaptive Sensor befindet sich in einem Gehäuse (24), welches aus antimagnetischem Material besteht. Zwischen zwei Sensorwicklungen (9) und (14) ist ein Dauermagnet (10) konzentrisch um die Kolbenstange (3) angeordnet. Den unteren Abschluß des Sensors bildet eine Isolierschicht (22). Verschlossen wird das Dämpferrohr (25) mit einem Verschluß (26), in dem sich die an der Kolbenstange (3) anliegende Abdichtung (12) befindet. Den Abschluß des ganzen Paketes bildet ein Gewindedeckel (23).

Dieses Ausführungsbeispiel zeigt deutlich, daß der vorbereitete Sensor nicht nur auf ein bestehendes Dämpferrohr gesetzt werden kann, sondern er kann auch in ein vorbereitetes Dämpferrohr nachträglich adaptiert werden.

Wie die dargestellten Ausführungsbeispiele zeigen, bietet die Erfindung die Möglichkeit, einen Relativgeschwindigkeitssensor mit einfachen und preiswerten Mitteln aufzubauen. Dieser Sensor liefert ein sehr genaues Spannungssignal, welches der Relativgeschwindigkeit proportional ist. Bei allen dargestellten Ausführungsbeispielen wird die Sensorwicklung nicht mit einer Spannung versorgt, d. h. es liegt keine Speisespannung an und somit ist der dargestellte Erfindungsgegenstand ein aktives Element, welches eine Spannung erzeugt, die ein Maß für die Relativgeschwindigkeit ist.

Um den Relativgeschwindigkeitssensor so universell wie möglich einzusetzen, kann er sowohl mit einer Steckverbindung, als auch mit einem unlöslich verbundenen Anschlußkabel, welches entsprechend konfektioniert werden kann, versorgt werden. Wichtig für die einwandfreie Funktion ist, daß die Magneten in axialer Richtung magnetisiert werden.

## Patentansprüche

1. Aktiver Sensor für Schwingungsdämpfer mit einem Dauermagneten und einer Sensorwicklung zur Messung der Relativgeschwindigkeit zwischen Aufbau und Achse eines Kraftfahrzeuges, wobei das induzierte Spannungssignal einer Auswerteschaltung zugeführt ist und zur Regelung bzw. zur Steuerung von Dämpfungsventilen verwendet wird, welche sich in hydraulischen, regelbaren bzw. verstellbaren Schwingungsdämpfern befinden, deren Dämpfungszylinder einseitig an der Radaufhängung und deren bewegliche, in den Dämpfungszylinder eintauchende, nicht antimagnetische Kolbenstange an der Karosserie befestigt sind, dadurch gekennzeichnet, daß der Sensor adaptiv ist und aus einem zylindrischen, antimagnetischen Gehäuse (11) mit einer zentralen Bohrung, welches auf den Dämpfungszylinder (4) aufsetzbar ist, besteht, wobei im Betrieb die Kolbenstange (3) beweglich durch die zentrale Bohrung hindurchgeführt ist und daß im Gehäuse (11) konzentrisch zur zentralen Bohrung mindestens ein ringförmiger, axial magnetisierter Dauermagnet (10, 17, 18, 20) und mindestens eine ringförmige Sensorwicklung (9, 14, 15, 19) angeordnet ist.

2. Aktiver Sensor nach Anspruch 1, dadurch gekennzeichnet, daß der Sensor aus einem ringförmigen Dauermagneten (10) und zwei in Reihe geschalteten, ober- und unterhalb des Dauermagneten (10) angeordneten Sensorwicklungen (9 und 14) besteht.

3. Aktiver Sensor nach Anspruch 1, dadurch gekennzeichnet, daß der Sensor aus einer Sensorwicklung (15) und jeweils ober- und unterhalb der Sensorwicklung angeordneten ringförmigen Dauermagneten (17) und (18) besteht.

4. Aktiver Sensor nach Anspruch 1, dadurch gekennzeichnet, daß der Sonsor aus einer Sensorwicklung (19) und einem diese umschließenden Dauermagneten (20) besteht.

5. Aktiver Sensor nach den Ansprüchen 1 bis 4, dadurch gekennzeichnet, daß die Sensorwicklung/en (9, 14, 15, 19) nicht von einer Spannungsquelle gespeist wird/werden.

6. Aktiver Sensor nach einem der Ansprüche 1 bis 5, dadurch gekennzeichnet, daß an dem Kolbenstangenaustritt (21) eine abstreifende Abdichtung (12) vorhanden ist.

7. Aktiver Sensor nach einem der Ansprüche 1 bis 5, dadurch gekennzeichnet, daß an dem Gehäuse (11) eine Steckverbindung (6) zum Anschluß der Ausgänge der Sensorwicklun- gen (9, 14, 15, 19) an die Auswerteschaltung vorhanden ist.

8. Aktiver Sensor nach den Ansprüchen 1 bis 6, dadurch gekennzeichnet, daß an dem Gehäuse (11) ein fest angeschlossenes Anschlußkabel (7) vorhanden ist.

9. Aktiver Sensor nach den Ansprüchen 1 bis 8, dadurch gekennzeichnet, daß der Sensor an radgeführten Federbeinen, bestehend aus einem Schwingungsdämpfer und einer Schraubenfeder (2), adaptiert werden kann.

## Claims

1. Active vibration damper sensor having a permanent magnet and a sensor winding for measuring the relative speed between the body and axle of a vehicle, wherein the induced voltage signal is passed to an evaluating circuit and the said induced voltage signal is used for regulating and/or controlling damping valves, which are located in hydraulically controllable and/or adjustable vibration dampers, whose damping cylinders are attached on the one side to the wheel suspension and whose moveable non anti-magnetic piston rod, which moves up and down inside the damping cylinder, is attached to the body, characterised in that the sensor is adaptive and comprises a cylindrical anti-magnetic housing (11) having a central bore, it being possible to place the said housing (11) on the damping cylinder (4), wherein during operation the piston rod (3) is moveably guided through the central bore and furthermore, in that at least one annular axially magnetised permanent magnet (10, 17, 18, 20) and at least one annular sensor winding (9, 14, 15, 19) are arranged in the housing (11) concentric to the central bore.

2. An active sensor according to claim 1, characterised in that the sensor comprises an annular permanent magnet (10) and two sensor windings (9 and 14) which are connected in series and arranged above and below the permanent magnet (10).

3. An active sensor according to claim 1, characterised in that the sensor comprises a sensor winding (15) and annular permanent magnets (17) and (18) arranged in each case above and below the sensor winding.

4. An active sensor according to claim 1, characterised in that the sensor comprises a sensor winding (19) and a permanent magnet (20) enveloping this sensor winding (19).

5. An active sensor according to claims 1 to 4, characterised in that the sensor winding(s) (9, 14, 15, 19) are not supplied by a voltage source.

6. An active sensor according to one of claims 1 to 5, characterised in that there is a stripping seal (12) on the piston rod outlet (21).

7. An active sensor according to one of claims 1 to 5, characterised in that a plug connection (6) is located on the housing (11) for the purpose of connecting the outputs of the sensor windings (9, 14, 15, 19) to the evaluating circuit.

8. An active sensor according to claims 1 to 6, characterised in that a fixedly connected connection cable (7) is located on the housing (11).

9. An active sensor according to claims 1 to 8, characterised in that the sensor can be adapted to the wheel-controlled shock absorbers, which comprise a vibration damper and a coil spring (2).

## Revendications

1. Capteur actif pour amortisseur de vibrations, avec un aimant permanent et un bobinage de capteur pour mesurer la vitesse relative entre la caisse et l'essieu d'un véhicule à moteur, dans lequel le signal de tension induit est fourni à un circuit de traitement, et est utilisé pour la régulation ou la commande de clapets amortisseurs se trouvant dans des amortisseurs de vibrations hydrauliques réglables ou ajustables, dont le cylindre d'amortissement est fixé d'un côté à la suspension de la roue, et dont la tige du piston mobile, non magnétique, qui plonge dans le cylindre d'amortissement, est fixée à la caisse, caractérisé en ce que le capteur est adaptatif et consiste en un logement (11) cylindrique, antimagnétique, avec un alésage central, prévu pour être placé sur le cylindre d'amortisseur (4), tandis que, en fonctionnement, la tige de piston (3) traverse de manière mobile l'alésage central, et en ce qu'au moins un aimant permanent (10, 17, 18, 20) annulaire, à aimantation axiale, et au moins un bobinage de capteur annulaire (9, 14, 15, 19) sont disposés dans le logement 11, concentriquement à l'alésage central.

2. Capteur actif selon la revendication 1, caractérisé en ce que le capteur consiste en un aimant permanent annulaire (10) et deux bobinages de capteur (9 et 14) raccordés en série et disposés au-dessus et en-dessous de l'aimant permanent (10).

3. Capteur actif selon la revendication 1, caractérisé en ce que le capteur consiste en un bobinage de capteur (15) et en des aimants permanents annulaires (17) et (18) disposés respectivement au-dessus et en-dessous du bobinage de capteur.

4. Capteur actif selon la revendication 1, caractérisé en ce que le capteur consiste en un bobinage de capteur (19) et en un aimant permanent (20) qui l'entoure.

5. Capteur actif selon les revendications 1 à 4, caractérisé en ce que le(s) bobinage(s) de capteur (9, 14, 15, 19) n'est pas (ne sont pas) alimenté(s) par une source de tension.

6. Capteur actif selon les revendications 1 à 5, caractérisé en ce qu'une étanchéification à raclage (12) est prévue à la sortie de la tige de piston (21).

7. Capteur actif selon les revendications 1 à 5, caractérisé en ce qu'une liaison multibroches (6) est prévue sur le logement (11) pour raccorder la sortie du bobinage de capteur (9, 14, 15, 19) au circuit de traitement.

8. Capteur actif selon les revendications 1 à 6, caractérisé en ce qu'un câble de raccordement (7) est fixé sur le logement (11).

9. Capteur actif selon les revendications 1 à 8, caractérisé en ce que le capteur peut être adapté à des jambes de force à ressort entrainées par les roues et consistant en un amortisseur de vibrations et en un ressort hélicoïdal (2).
